(19) Europäisches Patentamt
European Patent Office
Office européen des brevets

(11) **EP 2 343 835 B1**

(12) **EUROPEAN PATENT SPECIFICATION**

(45) Date of publication and mention
of the grant of the patent:
**12.09.2018 Bulletin 2018/37**

(21) Application number: **09832904.8**

(22) Date of filing: **30.11.2009**

(51) Int Cl.:
**H04B 7/00** *(2006.01)*

(86) International application number:
**PCT/CN2009/075216**

(87) International publication number:
**WO 2010/069222 (24.06.2010 Gazette 2010/25)**

(54) **METHOD AND SYSTEM FOR FREQUENCY OFFSET ESTIMATION AND COMPENSATION IN MOBILE COMMUNICATIONS**

VERFAHREN UND SYSTEM ZUR FREQUENZVERSATZSCHÄTZUNG UND KOMPENSATION IM MOBILFUNK

PROCÉDÉ ET SYSTÈME D'ESTIMATION ET DE COMPENSATION DE DÉCALAGE DE FRÉQUENCE DANS DES COMMUNICATIONS MOBILES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.12.2008 CN 200810241532**

(43) Date of publication of application:
**13.07.2011 Bulletin 2011/28**

(73) Proprietor: **ZTE Corporation
Shenzhen, Guangdong 518057 (CN)**

(72) Inventors:
• **LI, Ping
Shenzhen
Guangdong 518057 (CN)**

• **JIANG, Hai
Shenzhen
Guangdong 518057 (CN)**
• **MA, Yihua
Shenzhen
Guangdong 518057 (CN)**

(74) Representative: **Uexküll & Stolberg
Partnerschaft von
Patent- und Rechtsanwälten mbB
Beselerstraße 4
22607 Hamburg (DE)**

(56) References cited:
**CN-A- 1 595 829      CN-A- 1 719 815
CN-A- 101 212 440    GB-A- 2 374 767
US-A1- 2008 107 098**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of mobile communications, particularly to a method and system for frequency offset estimation and compensation in mobile communications generated in a high-speed movement environment.

## BACKGROUND

With advantages of high capacity, high multipath fading resistance and high frequency band utilization ratio, Code Division Multiple Access (CDMA) has become a major wireless transmission technology for the third generation mobile communications, especially Time Division-Synchronization Code Division Multiple Access (TD-SCDMA) and Wideband Code Division Multiple Access (WCDMA) systems are favored and have already been applied widely. A Long Term Evolution (LTE) project, which is the greatest new technology development project launched by a 3rd Generation Partnership Project (3GPP) in recent years, has improved and enhanced air access technology of 3G and becomes a hot technology that is researched in the field of wireless communications.

As the capability of independent innovation is increased, highways are built in succession, and the speed of railways is accelerated, high-speed traffic transportation has been applied widely and developed well and fast. More and more terminal users begin to use an increasing variety of mobile communication services on trains, thus it is required that network coverage can provide communication services of high quality and a larger system capacity.

A Doppler frequency shift occurs between a base station and a terminal due to the movement of the terminal, and in a mobile communication system, especially in a high-speed scene, the Doppler frequency shift is particularly obvious. The Doppler frequency shift will cause a frequency error between a receiver and a transmitter, and influence success rate of uplink access, success rate of handover as well as the capacity and coverage of the system.

The magnitude of the Doppler frequency shift is related to a relative movement speed, and the relationship is as follows:

$$f_d = -\frac{f_0}{C} \times v \times \cos\theta$$

where $\theta$ represents an angle between a movement direction of a terminal and a propagation direction of a signal; $v$ represents a movement speed of the terminal; C represents an electromagnetic wave propagation velocity; and $f_0$ represents a carrier frequency.

The movement speed of a terminal is generally ranged from 150km to 250km and will reach 300km/h-350km/h in more and more roads in the next few years. In this speed range, the Doppler frequency shift exceeds 400Hz, the base station and the terminal must be capable to support adequate frequency offset compensation technologies to meet the requirements on the quality of services.

For a receiver, it is necessary to have such functions: estimating a frequency error between the receiver and a transmitter; and correcting the frequency error. If the frequency of a signal received by a terminal is shifted by a frequency offset $f_d$, then after the terminal locks the frequency of a downlink signal and sends an uplink signal, the frequency of the uplink signal received by the transmitter is shifted by a frequency offset $2*f_d$.

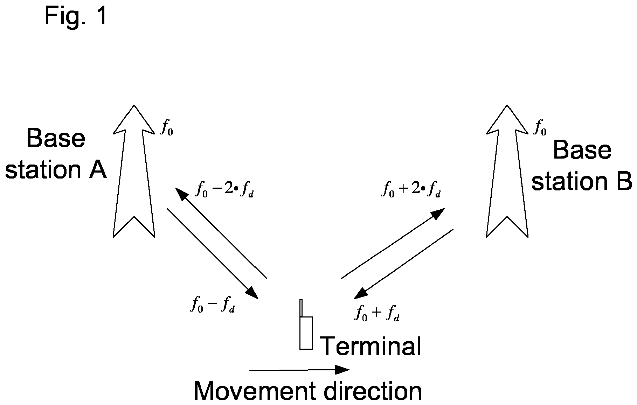

The relative movements of a terminal with respect to a base station in different directions will cause a variety of positive frequency offset and negative frequency offset. Fig. 1 is a schematic diagram illustrating a frequency offset of a terminal in movement. Provided that $f_0$ is the transmitting frequency of the base station, when the terminal moves away from the base station, a negative frequency offset $-f_d$ will be caused, the frequency received by the terminal will be $f_0-f_d$, and the frequency received by the base station will be $f_0-2\square f_d$; when the terminal moves towards the base station, a positive frequency offset $f_d$ will be caused, the frequency received by the terminal will be $f_0+f_d$, and the frequency received by the base station will be $f_0+2\square f_d$. The frequency of the terminal will hop from $f_0-f_d$ to $f_0+f_d$ when the terminal moves between two base stations (moves from one base station to another), then the terminal will suffer frequency hopping of $2*f_d$. For both a receiver of the base station and a receiver of the terminal, the frequency hopping of $2*f_d$ is quite a challenge, an over-high frequency offset will degrade the quality of communication, or even interrupt a service, especially in a high-speed movement environment.

The system performance will be severely lowered if a frequency offset cannot be correctly estimated and frequency offset compensation can not be performed correctly, especially when the frequency offset is high (corresponding to a relatively high movement speed of a terminal), therefore, for the implementation of a project, it is remarkably significant to seek for a method for frequency offset estimation and compensation, which has good and stable frequency offset correction performances.

Based on the above descriptions, the present invention proposes an effective method for frequency offset estimation and compensation for a receiver to address the problem that an uplink base station suffers the double frequency offset and the terminal suffers the frequency hopping.

US 2008/107098 A1 discloses multislot-mode automatic frequency correction apparatus, system and method.

GB 2374767A discloses smart compensation in wireless piconet.

## SUMMARY

The object of the present invention is to disclose a method for frequency offset estimation and compensation in mobile communications, which can conquer the disadvantages of the prior art, improve the frequency offset estimation and compensation capability of a base station and a terminal, and address the problem that the performance of a receiver is constrained by frequency offset correction capability.

A method and system according to the present invention is defined in claims 1 and 6, respectively. Preferred embodiments are defined in the dependent claims.

A method for frequency offset estimation and compensation in mobile communications comprises: S1: according to a record of a Signal-Interference Ratio (SIR) of data resulting from frequency offset estimation and compensation of previous N times, determining whether a measurement value of the data obtained from the compensation meets requirement of a predefined link quality threshold Q; if yes, S2 is executed; otherwise, S3 is executed; S2: performing frequency offset value estimation and compensation by using a historical frequency offset smoothing method, and then the flow is ended; and S3: performing frequency offset estimation and compensation by using a multi-branch frequency offset calculation method and selecting a frequency offset value corresponding to an optimal branch to compensate the data. Wherein, the optimal branch may have, not in a limited way, at least one of a maximum SIR, a correct Cyclic Redundancy Check (CRC) and a minimum Bit Error Ratio (BER).

S1 may further comprise: acquiring the recorded SIR of the data; which specifically comprises: setting a link quality status register R of N bit length and a link quality counter Count, wherein N is a positive integer, and setting a link quality threshold Q according to requirement on the link quality, preferably, the SIR threshold is set to be $SIR_{Thr}$; and determining whether the measurement value of the data obtaining from the compensation is greater than the link quality threshold Q, preferably, the SIR is greater than the SIR threshold $SIR_{Thr}$; if yes, updating one bit in the link quality status register R to be 1; otherwise, updating one bit in the link quality status register R to be 0; wherein a value of the link quality counter Count is number of bits '1' in the link quality status register R, and the link quality threshold Q refers to a link quality threshold $Count_{Thr}$ which is obtained from a simulation or a test based on an actual environment of an external field; correspondingly, S2 is executed if the value of the link quality counter Count is greater than the link quality threshold $Count_{Thr}$ in S1, or S3 is executed if the value of the link quality counter Count is not greater than the link quality threshold $Count_{Thr}$ in S1.

S2 may specifically comprise: compensating the data or a pilot frequency with a historical frequency offset value $\overline{f}_{k,n-1}$ which is taken as an initial frequency offset value; estimating a residual frequency offset value of the compensated data or pilot frequency; compensating the data with the residual frequency offset value; and calculating the SIR of the compensated data.

S3 may specifically comprise: setting multiple different initial frequency offset values for compensating the data or a pilot frequency respectively; performing residual frequency offset value estimation and compensation on the data or pilot frequency resulting from each compensation; calculating at least one of the SIR, CRC and BER of the data compensated by each branch; and selecting compensation data, an initial frequency offset value and a residual frequency offset value of the optimal branch which has at least one of the maximum SIR, the correct CRC and the minimum BER.

S2 may further comprise: updating, if the SIR of the compensated data is greater than an SIR threshold $SIR_{Thr}$, one bit of the link quality status register R to be 1, determining a current frequency offset value $f_{k,n}$ is equal to a sum of a historical frequency offset value $\overline{f}_{k,n-1}$ and the residual frequency offset value, and outputting a following historical frequency offset value $\overline{f}_{k,n}$ for a next frequency offset estimation: $\overline{f}_{k,n}=(1-p)^{*}\overline{f}_{k,n-1}+p^{*}f_{k,n}$ or updating, if the SIR of the compensated data is not greater than the SIR threshold $SIR_{Thr}$, one bit of the link quality status register R to be 0, and outputting the following historical frequency offset value $\overline{f}_{k,n}$ for the next frequency offset estimation: $\overline{f}_{k,n}=\overline{f}_{k,n-1}$; and updating the link quality counter Count.

S3 may further comprise: if the SIR of the optimal branch, which has at least one of the maximum SIR, the correct CRC and the minimum BER, is greater than an SIR threshold $SIR_{Thr}$, updating one bit of the link quality status register R to be 1, determining a current frequency offset value $f_{k,n}$ is equal to a sum of the initial frequency offset value and the residual frequency offset value of the branch with the maximum SIR, and outputting a following historical frequency offset value $\overline{f}_{k,n}$ for a next frequency offset estimation: $\overline{f}_{k,n} = (1-p)^{*}\overline{f}_{k,n-1} + p^{*}f_{k,n}$; or if the SIR of the optimal branch, which has at least one of the maximum SIR, a correct CRC and the minimum BER, is not greater than the SIR threshold $SIR_{Thr}$, updating one bit of the link quality status register R to be 0, determining that a current frequency offset value $f_{k,n}$ is equal to a previous historical frequency offset value $\overline{f}_{k,n-1}$, and outputting a following historical frequency offset value $\overline{f}_{k,n}$ for the next frequency offset estimation: $\overline{f}_{k,n}=\overline{f}_{k,n-1}$; and updating the link quality counter Count.

A system for frequency offset estimation and compensation in mobile communications comprises a determination unit, a frequency offset value estimation and compensation unit and a data compensation unit, wherein

the determination unit is used for determining, according to a record of an SIR of data resulting from frequency offset estimation and compensation of previous N times, whether a measurement value of the data obtained from the compensation meets requirement of a predefined link quality threshold Q;

the frequency offset value estimation and compensation unit is used for performing frequency offset value estimation and compensation by using a historical frequency offset smoothing method when the measurement value of the data obtained from the compensation meets the requirement of the predefined link quality threshold Q; and

the data compensation unit is used for performing frequency offset estimation and compensation by using a multi-branch frequency offset calculation method when the measurement value of the data obtained from the compensation fails to meet the requirement of the predefined link quality threshold Q and selecting a frequency offset value corresponding to an optimal branch to compensate the data.

The system may further comprise: an acquisition unit which is used for acquiring the recorded SIR of the data, wherein the SIR is acquired by a following way: setting a link quality status register R of N bit length and a link quality counter Count, wherein N is a positive integer, and setting a link quality threshold Q according to requirement on the link quality; and updating one bit in the link quality status register R to be 1 if the measurement value of the data obtaining from the compensation is greater than the link quality threshold Q, or to be 0 if the measurement value of the data obtaining from the compensation is not greater than the link quality threshold Q;

the frequency offset value estimation and compensation unit is further used for performing frequency offset value estimation and compensation by using the historical frequency offset smoothing method when the value of the link quality counter Count is greater than a link quality threshold $Count_{Thr}$; and

the data compensation unit is further used for performing frequency offset estimation and compensation by using the multi-branch frequency offset calculation method when the value of the link quality counter Count is not greater than the link quality threshold $Count_{Thr}$ and selecting the frequency offset value corresponding to the optimal branch to compensate the data.

The frequency offset value estimation and compensation unit may be further used for compensating the data or a pilot frequency with a historical frequency offset value $\overline{f}_{k,n-1}$ which is taken as an initial frequency offset value; estimating a residual frequency offset value of the compensated data or pilot frequency; compensating the data with the residual frequency offset value; and calculating the SIR of the compensated data.

The data compensation unit may be further used for: setting multiple different initial frequency offset values for compensating the data or a pilot frequency respectively; performing residual frequency offset value estimation and compensation on the data or pilot frequency resulting from each compensation; calculating the data compensated by each branch; and selecting compensation data, an initial frequency offset value and a residual frequency offset value of the optimal branch.

The frequency offset value estimation and compensation unit may be further used for updating, if the SIR of the compensated data is greater than an SIR threshold $SIR_{Thr}$, one bit of the link quality status register R to be 1, determining a current frequency offset value $f_{k,n}$ is equal to a sum of a historical initial frequency offset value $\overline{f}_{k,n-1}$ and the residual frequency offset value, and outputting a following historical frequency offset value $\overline{f}_{k,n}$ for a next frequency offset estimation: $\overline{f}_{k,n} = (1-p)^*\overline{f}_{k,n-1} + p^*f_{k,n}$; or updating, if the SIR of the compensated data is not greater than the SIR threshold $SIR_{Thr}$, one bit of the link quality status register R to be 0, and outputting the following historical frequency offset value $\overline{f}_{k,n}$ for the next frequency offset estimation: $\overline{f}_{k,n} = \overline{f}_{k,n-1}$; and updating the link quality counter Count.

The data compensation unit may be further used for updating, if the SIR of the optimal branch is greater than an SIR threshold $SIR_{Thr}$, one bit of the link quality status register R to be 1, determining a current frequency offset value $f_{k,n}$ is equal to a sum of the initial frequency offset value and the residual frequency offset value of the branch with the maximum SIR, and outputting a following historical frequency offset value $\overline{f}_{k,n}$ for a next frequency offset estimation: $\overline{f}_{k,n} = (1-p)^*\overline{f}_{k,n-1} + p^*f_{k,n}$; or updating, if the SIR of the optimal branch is not greater than the SIR threshold $SIR_{Thr}$, one bit of the link quality status register R to be 0, determining that a current frequency offset value $f_{k,n}$ is equal to a previous historical frequency offset value $\overline{f}_{k,n-1}$, and outputting a following historical frequency offset value $\overline{f}_{k,n}$ for the next frequency offset estimation: $\overline{f}_{k,n} = \overline{f}_{k,n-1}$; and updating the link quality counter Count.

By estimating and correcting a frequency offset using a historical frequency offset smoothing method and providing a reliable initial frequency offset correction value for the historical smoothing method through a multi-branch attempt method, the method for frequency offset estimation and compensation in mobile communications disclosed in the present invention can effectively estimate a relative frequency offset between a base station and a terminal, widen the frequency offset estimation and compensation range of a receiver, and improve the frequency offset estimation and compensation capability of the base station and the terminal. By adopting this method, the receiver can even correct a large frequency offset of a link correctly and stably even in a high speed movement environment, thus reliably guaranteeing the quality of communication services. As the attempt on multiple branches does not cost too many times, the amount of calculation is not large, and this method is a good way to implement a project.

## BRIEF DESCRIPTION OF THE DRAWINGS

Fig. 1 is a schematic diagram illustrating a frequency offset of a terminal in movement; and

Fig. 2 is a flow chart illustrating a method for frequency offset estimation according to an embodiment of the present invention.

## DETAILED DESCRIPTION

The present invention is described below in detail with reference to the drawings in combination with specific embodiments.

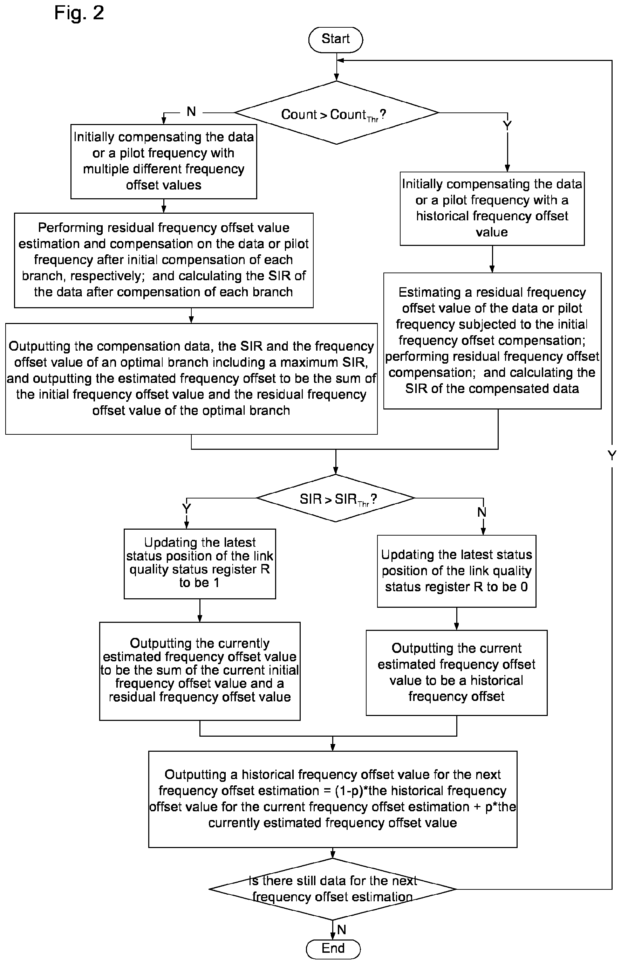

Fig. 2 illustrates an embodiment of the present invention in detail, and it should be understood that the preferred embodiment here is only for illustrating and explaining the present invention but not for limiting the present invention.

Although the following technical solution is described aiming at user K, the solution for frequency offset estimation and compensation is identical for all users. n represents the serial number of a data unit implementing a frequency offset algorithm.

A link quality status register $R_k$ is initialized, wherein $R_{k,n-1} = [b_1\ b_2 \cdots b_N]$, the bit length of $R_k$ is N, each bit of $R_k$ represents a received link quality status, 0 represents a bad link quality status, and 1 represents a good link quality status. The value of a link quality counter $Count_k$ = (the number of bits '1' in the link quality status register $R_k$). The bits in $R_k$ are all initialized to be 0, and updated and maintained in a manner of left-out-right-in or left-in-right-out.

As shown in Fig. 2, a determination is firstly made on whether the value of the link quality counter $Count_k$ is greater than a threshold $Count_{Thr}$; if yes, then frequency offset estimation and compensation is performed on data by using a historical frequency offset smoothing calculation method; otherwise, initial frequency offset estimation and compensation is performed on data by using a multi-branch data frequency offset calculation method, and then a historical initial frequency offset value for the historical frequency offset smoothing calculation method is calculated.

The value of $Count_{Thr}$, which is a link quality threshold obtained through a simulation or a test based on the external actual environment, is related to the attempt times of the multiple branches and can be obtained through a test in a wireless scene. The value of $Count_{Thr}$ varies depending on different scenes.

Data is estimated and compensated by using the historical frequency offset smoothing calculation method when $Count_k > Count_{Thr}$. Data $d_{k,n}$ is initially compensated with a historical initial frequency offset value $\overline{f}_{k,n-1}$ which originates from a previous frequency offset estimation output. If there is no previous frequency offset estimation value, an initial frequency offset value $\overline{f}_{k,0} = 0$. Then a residual frequency offset value $\Delta f_{k,n}$ of the data subjected to the initial frequency offset compensation is estimated to perform residual frequency offset compensation so as to obtain a data $\tilde{d}_{k,n}$; and a Signal-Interference Ratio (SIR) $SIR_{k,n}$ of the compensated data $\tilde{d}_{k,n}$ is calculated.

After the frequency offset value is obtained, frequency offset compensation is performed on the currently-received data which is subjected to a frequency offset by using a well-known method which converts frequency offset of the data at different positions to time-related phase offset and then compensates the data.

The residual frequency offset compensation is another frequency offset estimation that is performed on the data resulting from the initial frequency offset compensation by using one of existing methods. SIR, CRC or BER of the data is also calculated by a method that is well known in the field of communications.

A determination is made on whether the Signal-Interference Ratio $SIR_{k,n}$ of the data estimated by the historical frequency offset smoothing calculation method or by the multi-branch data frequency offset estimation method is greater than an SIR threshold $SIR_{Thr}$ obtained through a simulation or wireless scene test; if yes, then the latest status position of the link quality status register $R_k$ is updated to be 1, wherein $R_{k,n}=[b_2, b_3 \dots b_n\ 1]$, and a currently-estimated frequency offset value $f_{k,n}$ is output as follows: $f_{k,n}=\overline{f}_{k,n-1}+\Delta f_{k,n}$; otherwise, the latest status position of the link quality status register $R_k$ is updated to be 0, wherein $R_{k,n}=[b_2, b_3 \dots b_n\ 0]$, and a currently-estimated frequency offset value $f_{k,n}$ is output as follows: $f_{k,n}=\overline{f}_{k,n-1}$.

At last, a historical initial frequency offset value for the next frequency offset estimation is output as follows:
$$\overline{f}_{k,n} = (1-p)^*\overline{f}_{k,n-1}+p^*f_{k,n},$$ where p represents a smoothing factor.

The link quality counter $Count_k$ is updated.

If $Count_k \leq Count_{Thr}$, a multi-branch data frequency offset estimation and compensation is performed on the data to calculate the initial value for the historical frequency offset smoothing calculation method.

In m branches, the data $d_{k,n}$ is initially compensated with an initial frequency offset value $f_{k,n-1,i}$ ($i=1,\cdots,m$) of different branches respectively so as to correct the phase of the data. The initial frequency offset value $f_{k,n-1,i}$ is predefined through a simulation, and the number of m can be set based on the capability of a receiver.

A residual frequency offset value $\Delta f_{k,n,i}$ of the data after initial frequency offset compensation is estimated respectively, and residual frequency offset compensation is performed to obtain data $\tilde{d}_{k,n,i}$.

The $SIR_{k,n}$, CRC or BER of the data $\tilde{d}_{k,n}$ after compensation of each branch is respectively calculated to output a frequency offset compensation data that is estimated for the optimal branch which has at least one of a maximum SIR, a correct CRC and a minimum BER, and compensation data $\tilde{d}_{k,n}$, $STR_{k,n}$, $CRC_{k,n}$ and $BER_{k,n}$ of the optimal branch as well as the current frequency offset value $f_{k,n}$ are output, wherein $f_{k,n} = f_{k,n-1,i0} + \Delta f_{k,n,i0}$, where i0 is the serial number of a selected branch.

A determination is made on whether the estimated $SIR_{k,n}$ of the data is greater than $SIR_{Thr}$; if yes, then the latest status position of the link quality status register $R_k$ is updated to be 1, wherein $R_{k,n} = [b_2\ b_3\ ...\ b_n\ 1]$, and the currently-estimated frequency offset value $f_{k,n}$ is output as follows: $f_{k,n} = f_{k,n-1,i0} + \Delta f_{k,n,i0}$; otherwise, the latest status position of the link quality status register $R_k$ is updated to be 0, wherein $R_{k,n} == [b_2,\ b_3\ ...\ b_n\ 0]$, and the currently-estimated frequency offset value $f_{k,n}$ is output as follows: $f_{k,n} = \overline{f}_{k,n-1}$, that is, the current-estimated frequency offset value is not updated and still equal to the historical frequency offset value obtained from the previous frequency offset estimation.

At last, a historical frequency offset value for the next frequency offset estimation is output as follows: $\overline{f}_{k,n} = (1-p)*\overline{f}_{k,n-1} + p*f_{k,n}$.

The link quality counter $Count_k$ is updated.

The present invention is applicable to all CDMA systems, especially to TD-SCDMA systems and all SCDMA systems, and is also applicable to OFDM systems, especially to LTE systems. Corresponding methods and devices for frequency offset estimation and compensation can be designed by any engineer with knowledge of signal processing and communications based on the present invention, but it should be understood that such designs belong to the scope and range of the present invention.

The technical solution of the present invention comprises the following steps.

S1: setting a link quality status register R and a link quality counter Count, wherein the value of the link quality counter Count is equal to the number of bits '1' in the link quality status register R; determining whether the value of the link quality counter Count is greater than a count threshold for a historical smoothing method; if yes, then S2 is executed to perform frequency offset estimation and compensation on data by using a historical frequency offset smoothing calculation method; otherwise, S3 is executed to perform frequency offset estimation and compensation on data by using a multi-branch data frequency offset calculation method so as to calculate an initial value for the historical frequency offset smoothing calculation method.

S2: performing frequency offset estimation and compensation by using the historical frequency offset smoothing calculation method.

This step can specifically comprise the following sub-steps.

S21: initially compensating the data or a pilot frequency with a historical frequency offset value;

S22: estimating a residual frequency offset value of the data or pilot frequency subjected to the initial frequency offset compensation, and performing residual frequency offset compensation; and

S23: calculating the SIR of the compensated data.

S3: performing multi-branch data frequency offset estimation and compensation, and calculating an initial value for the historical frequency offset smoothing calculation method.

This step can specifically comprise the following sub-steps.

S31: compensating the data or a pilot frequency with multiple different frequency offset values which act as the initial frequency offset values of different branches, respectively;

S32: performing residual frequency offset value estimation and compensation on the data or pilot frequency after initial compensation of each branch, respectively;

S33: calculating the SIR, CRC, BER of the data after compensation of each branch or the combination thereof and the like; and

S34: outputting the compensation data, the SIR and the frequency offset value of an optimal branch which has at least one of a maximum SIR, a correct CRC and a minimum BER, and outputting the estimated frequency offset to be the sum of the initial frequency offset value and the residual frequency offset value of the optimal branch.

S4: determining whether the estimated SIR of the data is greater than an SIR threshold; if yes, then S5 is executed; otherwise, S6 is executed.

S5: updating the latest status position of the link quality status register R to be 1, and outputting the currently estimated frequency offset value to be the sum of a historical frequency offset value and a residual frequency offset value.

S6: updating the latest status position of the link quality status register R to be 0, and outputting the currently estimated frequency offset value to be a historical frequency offset value.

S7: outputting a historical frequency offset value for the next frequency offset estimation.

Wherein the historical frequency offset value for the next frequency offset estimation=(1-p)*the historical frequency offset value for the current frequency offset estimation + p*the currently estimated frequency offset value.

S8: updating the link quality counter Count.

This technical solution is applicable, not in a limited way, to base stations and mobile telephones.

If allowed by the hardware capability of a receiver, the branches can be increased to widen the frequency offset correction range.

In order to realize the above technical solution, the present invention also provides a system for frequency offset estimation and compensation in mobile communications, which comprises a determination unit, a frequency offset value estimation and compensation unit, and a data compensation unit. The determination unit is used for determining, according to a record of an SIR of data resulting from frequency offset estimation and compensation of previous N times, whether a measurement value of the data obtained from the compensation meets requirement of a predefined link quality threshold Q. The frequency offset value estimation and compensation unit is used for performing frequency offset value estimation and compensation by using a historical frequency offset smoothing method when the measurement value of the data obtained from the compensation meets the requirement of the predefined link quality threshold Q. The data compensation unit is used for performing frequency offset estimation and compensation by using a multi-branch frequency offset calculation method when the measurement value of the data obtained from the compensation fails to meet the requirement of the predefined link quality threshold Q and selecting a frequency offset value corresponding to an optimal branch to compensate the data.

The system further comprises: an acquisition unit which is used for acquiring the recorded SIR of the data. The SIR is acquired by a following way: setting a link quality status register R of N bit length and a link quality counter Count, wherein N is a positive integer, and setting a link quality threshold Q according to requirement on the link quality; and updating one bit in the link quality status register R to be 1 if the measurement value of the data obtaining from the compensation is greater than the link quality threshold Q, or to be 0 if the measurement value of the data obtaining from the compensation is not greater than the link quality threshold Q.

The frequency offset value estimation and compensation unit is further used for performing frequency offset value estimation and compensation by using the historical frequency offset smoothing method when the value of the link quality counter Count is greater than a link quality threshold Count$_{Thr}$.

The data compensation unit is further used for performing frequency offset estimation and compensation by using the multi-branch frequency offset calculation method when the value of the link quality counter Count is not greater than the link quality threshold Count$_{Thr}$ and selecting the frequency offset value corresponding to the optimal branch to compensate the data, wherein the optimal branch has at least one of a maximum SIR, a correct CRC and a minimum BER.

The frequency offset value estimation and compensation unit and the data compensation unit are respectively illustrated below.

The frequency offset value estimation and compensation unit is further used for compensating the data or a pilot frequency with a historical frequency offset value $\overline{f}_{k,n-1}$ which is taken as an initial frequency offset value; estimating a residual frequency offset value of the compensated data or pilot frequency; compensating the data with the residual frequency offset value; and calculating the SIR of the compensated data.

Wherein there exists a case that the SIR of the compensated data is greater than an SIR threshold $SIR_{Thr}$.

In this case, the frequency offset value estimation and compensation unit is further used for updating one bit of the link quality status register R to be 1, determining a current frequency offset value $f_{k,n}$ is equal to a sum of a historical initial frequency offset value $\overline{f}_{k,n-1}$ and the residual frequency offset value, and outputting a following historical frequency offset value $\overline{f}_{k,n}$ for the next frequency offset estimation:

$$\overline{f}_{k,n} = (1-p) * \overline{f}_{k,n-1} + p * f_{k,n}.$$

And there also exists another case that the SIR of the compensated data is not greater than the SIR threshold $SIR_{Thr}$.

In this case, the frequency offset value estimation and compensation unit is further used for updating one bit of the link quality status register R to be 0, and outputting the following historical frequency offset value $f_{k,n}$ for the next frequency offset estimation: $\overline{f}_{k,n}=f_{k,n-1}$, and updating the link quality counter Count.

The data compensation unit is further used for: setting multiple different initial frequency offset values for compensating the data or a pilot frequency respectively; performing residual frequency offset value estimation and compensation on the data or pilot frequency resulting from each compensation; calculating the data compensated by each branch; and selecting compensation data, an initial frequency offset value and a residual frequency offset value of an optimal branch which has at least one of a maximum SIR, a correct CRC and a minimum BER.

Wherein there exists a case that the SIR of the optimal branch, which has at least one of a maximum SIR, a correct CRC and a minimum BER, is greater than the SIR threshold $SIR_{Thr}$.

In this case, the data compensation unit is further used for updating one bit of the link quality status register R to be 1, determining the current frequency offset value $f_{k,n}$ is equal to a sum of the initial frequency offset value and the residual frequency offset value of the branch with the maximum SIR, and outputting a following historical frequency offset value $\overline{f}_{k,n}$ for the next frequency offset estimation:

$$\overline{f}_{k,n} = (1-p) * \overline{f}_{k,n-1} + p * f_{k,n}.$$

There still exists another case that the SIR of the optimal branch, which has at least one of a maximum SIR, a correct CRC and a minimum BER, is not greater than an SIR threshold $SIR_{Thr}$.

In this case, the data compensation unit is further used for updating one bit of the link quality status register R to be 0, determining that a current frequency offset value $f_{k,n}$ is equal to a previous historical frequency

offset value $\overline{f}_{k,n-1}$, and outputting a following historical frequency offset value $\overline{f}_{k,n}$ for the next frequency offset estimation: $\overline{f}_{k,n}=\overline{f}_{k,n-1}$; and updating the link quality counter Count.

The above descriptions are only preferred embodiments of the present invention and are not limiting for the protection scope of the present invention which is defined by the appended claims.

**Claims**

1. A method for frequency offset estimation and compensation in mobile communications, comprising:

    S1: determining whether the value of a link quality counter Count is greater than a count threshold for a historical smoothing method; if yes, then S2 is executed to perform frequency offset estimation and compensation on data or pilot frequency by using a historical frequency offset smoothing calculation method; otherwise, S3 is executed to perform frequency offset estimation and compensation on data or pilot frequency by using a multi-branch data frequency offset calculation method so as to calculate an initial value for the historical frequency offset smoothing calculation method;
    S2: initially compensating the data or pilot frequency with a historical frequency offset value; estimating a residual frequency offset value of the data or pilot frequency subjected to the initial frequency offset compensation, and performing residual frequency offset compensation; and calculating the SIR of the compensated data or pilot frequency;
    S3: compensating the data or pilot frequency with multiple different frequency offset values which act as the initial frequency offset values of different branches, respectively; performing residual frequency offset value estimation and compensation on the data or pilot frequency after initial compensation of each branch, respectively; calculating the SIR of the data or pilot frequency after compensation of each branch; and outputting the compensation data, the SIR and the frequency offset value of an optimal branch which has at least one of a maximum SIR, a correct CRC and a minimum BER, and outputting the estimated frequency offset to be the sum of the initial frequency offset value and the residual frequency offset value of the optimal branch;
    S4: determining whether the SIR is greater than an SIR threshold; if yes, then S5 is executed; otherwise, S6 is executed;

    S5: when the SIR calculated in S3 is greater than the SIR threshold, updating the value of the link quality counter Count to add 1, and outputting a currently estimated frequency offset value to be the estimated frequency offset of S3;
    S6: when the SIR calculated in S3 is not greater than the SIR threshold, keeping unchanged the value of the link quality counter Count, and outputting the currently estimated frequency offset value to be a previous historical frequency offset value;
    S7: when the SIR calculated in S3 is greater than the SIR threshold, outputting a historical frequency offset value for the next frequency offset estimation as (1-p) times the initial frequency offset value of the optimal branch plus p times the currently estimated frequency offset value of S5; when the SIR calculated in S3 is not greater than the SIR threshold, outputting the historical frequency offset value for the next frequency offset estimation as the previous historical frequency offset value; and
    S8: if there is still data for the next frequency offset estimation, going back to S1; otherwise ending the method.

2. The method according to claim 1, S1 further comprising: setting the link quality counter Count and a link quality status register R, wherein the value of the link quality counter Count is equal to the number of bits '1' in the link quality status register R, the link quality status register R has N bit length and N is a positive integer; the count threshold refers to a link quality threshold $Count_{Thr}$ which is obtained from a simulation or a test based on an actual environment of an external field.

3. The method according to claim 2, wherein S5 further comprises S5':

    when the SIR calculated in S2 is greater than the SIR threshold, updating the value of the link quality counter Count to add 1, and outputting a currently estimated frequency offset value to be a sum of the historical frequency offset value of S2 and the residual frequency offset value of S2; when the SIR calculated in S2 is not greater than the SIR threshold, updating the latest status position of the link quality status register R to be 0; and
    S7 further comprises: when the SIR calculated in S2 is greater than the SIR threshold, outputting a historical frequency offset value for the next frequency offset estimation as (1-p) times the historical frequency offset value of S2 plus p times the currently estimated frequency offset value of S5'; when the SIR calculated in S2 is not greater than the SIR threshold, outputting the historical frequency offset value for the next frequency offset estimation as the historical frequency offset value of S2.

4. The method according to claim 2, further comprising: setting the initial value of each bit in the link quality status register R to be 0.

5. The method according to claim 1, further comprising: determining the initial frequency offset value of each branch through a simulation.

6. A system for frequency offset estimation and compensation in mobile communications, comprising: a determination unit, a frequency offset value estimation and compensation unit and a data compensation unit, wherein

the determination unit is used for determining whether the value of a link quality counter Count is greater than a count threshold for a historical smoothing method;

the frequency offset value estimation and compensation unit is used for performing frequency offset value estimation and compensation on data or pilot frequency by using a historical frequency offset smoothing method, S2, when the value of a link quality counter Count is greater than a count threshold; and

the data compensation unit is used for performing frequency offset estimation and compensation on data or pilot frequency by using a multi-branch data frequency offset calculation method, S3, when the value of a link quality counter Count is not greater than a count threshold so as to calculate an initial value for the historical frequency offset smoothing calculation method;

the frequency offset value estimation and compensation unit is further used for performing S2 by initially compensating the data or pilot frequency with a historical frequency offset value; estimating a residual frequency offset value of the data or pilot frequency subjected to the initial frequency offset compensation, and performing residual frequency offset compensation; and calculating the SIR of the compensated data or pilot frequency;

the data compensation unit is further used for performing S3 by compensating the data or pilot frequency with multiple different frequency offset values which act as the initial frequency offset values of different branches, respectively; performing residual frequency offset value estimation and compensation on the data or pilot frequency after initial compensation of each branch, respectively; calculating the SIR of the data or pilot frequency after compensation of each branch; and outputting the compensation data, the SIR and the frequency offset value of an optimal branch which has at least one of a maximum SIR, a correct CRC and a minimum BER, and outputting the estimated frequency offset to be the sum of the initial frequency offset value and the residual frequency offset value of the optimal branch; the data compensation unit is further used for updating, when the SIR of the optimal branch is greater than an SIR threshold, the value of the link quality counter Count to add 1, outputting a currently estimated frequency offset value to be the estimated frequency offset; and outputting a historical frequency offset value for the next frequency offset estimation as (1-p) times the initial frequency offset value of the optimal branch plus p times the currently estimated frequency offset value; and for keeping unchanged, when the SIR of the optimal branch is not greater than an SIR threshold, the value of the link quality counter Count, and outputting the currently estimated frequency offset value to be a previous historical frequency offset value, and outputting a historical frequency offset value for the next frequency offset estimation as the previous historical frequency offset value.

7. The system according to claim 6, further comprising: an acquisition unit which is used for acquiring the value of the link quality counter Count, wherein the value of the link quality counter Count is equal to the number of bits '1' in a link quality status register R, the link quality status register R has N bit length and N is a positive integer.

8. The system according to claim 7, wherein the frequency offset value estimation and compensation unit is further used for updating, when the SIR of the compensated data by the historical frequency offset smoothing method is greater than the SIR threshold, updating the value of the link quality counter Count to add 1, and outputting a currently estimated frequency offset value to be a sum of the historical frequency offset value and the residual frequency offset value; and outputting a historical frequency offset value for the next frequency offset estimation as (1-p) times the historical frequency offset value plus p times the currently estimated frequency offset value; or

updating, when the SIR of the compensated data by the historical frequency offset smoothing method is not greater than the SIR threshold, updating the latest status position of the link quality status register R to be 0, and outputting the historical frequency offset value for the next frequency offset estimation as the historical frequency offset value.

**Patentansprüche**

1. Verfahren zur Frequenzversatzschätzung und -kompensation im Mobilfunk, bei dem:

S1: festgestellt wird, ob der Wert eines Verbindungsqualitätszählers Count größer ist als eine Zählerschwelle für ein historisches Glättungsverfahren ist,

wenn ja, S2 ausgeführt wird, um eine Frequenzversatzschätzung und -kompensation auf Daten- oder Pilotfrequenz durchzuführen, indem ein historisches Frequenzversatz-Glättungsberechnungsverfahren verwendet wird,

anderenfalls, S3 ausgeführt wird, um eine Frequenzversatzschätzung und -kompensation auf einer Daten- oder Pilotfrequenz durchzuführen, indem ein mehrzweigiges Datenfrequenzversatz-Berechnungsverfahren verwendet wird, um so einen Anfangswert für das historische Frequenzversatz-Glättungsberechnungsverfahren zu berechnen,

S2: anfangs die Daten- oder Pilotfrequenz mit einem historischen Frequenzversatzwert kompensiert wird,

ein residualer Frequenzversatzwert der der anfänglichen Frequenzversatzkompensation unterzogenen Daten- oder Pilotfrequenz geschätzt wird, und die residuale Frequenzversatzkompensation durchgeführt wird und

das SIR der kompensierten Daten- oder Pilotfrequenz berechnet wird,

S3: die Daten- oder Pilotfrequenz mit mehreren verschiedenen Frequenzversatzwerten kompensiert wird, die als anfängliche Frequenzversatzwerte jeweils verschiedener Zweige fungieren,

nach anfänglicher Kompensation jedes jeweiligen Zweiges die residuale Frequenzversatzschätzung und -kompensation an der Datenoder Pilotfrequenz durchgeführt wird,

das SIR der Daten- oder Pilotfrequenz nach Kompensation jedes Zweiges berechnet wird und

die Kompensationsdaten, das SIR und der Frequenzversatzwert eines optimalen Zweiges ausgegeben werden, der wenigstens eines von einem maximalen SIR, einem korrekten CRC und einem minimalen BER hat, und der geschätzte Frequenzversatz ausgegeben wird, der die Summe des anfänglichen Frequenzversatzwertes und des residualen Frequenzversatzwertes des optimalen Zweiges ist,

S4: festgestellt wird, ob das SIR größer als eine SIR-Schwelle ist, wenn ja, S5 ausgeführt wird, anderenfalls S6 ausgeführt wird,

S5: wenn das in S3 berechnete SIR größer als die SIR-Schwelle ist, der Wert des Verbindungsqualitätszählers Count durch Addition von 1 aktualisiert wird und ein aktuell geschätzter Frequenzversatzwert als geschätzter Frequenzversatz von S3 ausgegeben wird,

S6: wenn das in S3 berechnete SIR nicht größer als die SIR-Schwelle ist, der Wert des Verbindungsqualitätszählers Count unverändert belassen wird und der aktuell geschätzte Frequenzversatzwert der ein früherer, historischer Frequenzversatzwert ist, ausgegeben wird,

S7: wenn das in S3 berechnete SIR größer als die SIR-Schwelle ist, ein historischer Frequenzversatzwert für die nächste Frequenzversatzschätzung als der (1-p)-fache anfängliche Frequenzversatzwert des optimalen Zweiges plus p multipliziert mit dem aktuellen geschätzten Frequenzversatzwert aus S5 ausgegeben wird, wenn das in S3 berechnete SIR nicht größer als die SIR-Schwelle ist, der historische Frequenzversatzwert für die nächste Frequenzversatzschätzung als der frühere historische Frequenzversatzwert ausgegeben wird und

S8: wenn noch Daten für die nächste Frequenzversatzschätzung vorhanden sind, zu S1 zurückgekehrt wird, anderenfalls das Verfahren beendet wird.

2. Verfahren nach Anspruch 1, wobei S1 weiter beinhaltet: den Verbindungsqualitätszähler Count und ein Verbindungsqualitäts-Statusregister R zu setzen, wobei der Wert des Verbindungsqualitätszähler Count gleich der Anzahl von Bits "1" in dem Verbindungsqualitäts-Statusregister R ist, wobei das Verbindungsqualitäts-Statusregister R eine Länge von N Bit hat und N eine positive ganze Zahl ist, wobei die Zählerschwelle Bezug nimmt auf eine Verbindungsqualitätsschwelle $Count_{Thr}$, die aus einer Simulation oder einem Test basierend auf einer tatsächlichen Umgebung eines externen Feldes erhalten worden ist.

3. Verfahren nach Anspruch 2, wobei S5 weiter S5' beinhaltet:

wenn das in S2 berechnete SIR größer als die SIR-Schwelle ist, den Wert des Verbindungsqualitätszählers Count durch Addieren von 1 zu aktualisieren und einen aktuell geschätzter Frequenzversatzwert, der die Summe des historischen Frequenzversatzwertes aus S2 und des residualen Frequenzversatzwertes aus S2 ist, auszugeben, wenn das in S2 berechnete SIR nicht größer als die SIR-Schwelle ist, die letzte Statusposition des Verbindungsqualitäts-Statusregisters R auf 0 zu aktualisieren, und

S7 weiter beinhaltet: wenn das in S2 berechnete SIR größer als die SIR-Schwelle ist, einen historischen Frequenzversatzwert für die nächste Frequenzversatzschätzung als das (1-p)-fache des historischen Frequenzversatzwertes aus S2 plus p multipliziert mit dem aktuell geschätzten Frequenzversatzwert aus S5' auszugeben, wenn das in S2 berechnete SIR nicht größer als die SIR-Schwelle ist, den historischen Frequenzversatzwert für die nächste Frequenzversatzschätzung als den historischen Frequenzversatzwert aus S2 auszugeben.

4. Verfahren nach Anspruch 2, das weiter beinhaltet: Den Anfangswert jedes Bits in dem Verbindungsqualität-Statusregister R auf 0 zu setzten.

5. Verfahren nach Anspruch 1, das weiter beinhaltet: Den anfänglichen Frequenzversatzwert jedes Zweiges durch eine Simulation zu bestimmen.

6. System zur Frequenzversatzbestimmung und -kompensation im Mobilfunk mit: einer Entscheidungseinheit, einer Frequenzversatzwert-Schätzungs- und -kompensationseinheit und einer Datenkompensationseinheit, wobei

die Entscheidungseinheit dazu verwendet wird, um zu entscheiden, ob der Wert des Verbindungsqualitätszählers Count größer als eine Zählerschwelle für ein historisches Glättungsverfahren ist,

die Frequenzversatzwert-Schätzungs- und -kompensationseinheit verwendet wird, um die Frequenzversatzwertschätzung und -kompensation auf der Daten- oder Pilotfrequenz durchzuführen, indem ein historisches Frequenzversatz-Glättungsverfahren, S2, verwendet wird, wenn der Wert eines Verbindungsqualitätszählers Count größer als eine Zählerschwelle ist, und

die Datenkompensationseinheit dazu verwendet wird, um die Frequenzversatzschätzung und -kompensation auf der Daten- oder Pilotfrequenz durchzuführen, indem ein mehrzweigiges Datenfrequenzversatz-Berechnungsverfahren, S3, verwendet wird, wenn der Wert eines Verbindungsqualitätszählers Count nicht größer als eine Zählerschwelle ist, um so einen Anfangswert für das historische Frequenzversatz-Glättungsberechnungsverfahren zu berechnen,

die Frequenzversatzwert-Schätz- und -kompensationseinheit weiter verwendet wird, um S2 durchzuführen, indem anfangs die Daten- oder Pilotfrequenz mit einem historischen Frequenzversatzwert kompensiert wird, ein residualer Frequenzversatzwert der Daten- oder Pilotfrequenz, die der anfänglichen Frequenzversatzkompensation unterzogen worden ist, geschätzt wird und indem die residuale Frequenzversatzkompensation durchgeführt wird, und das SIR der kompensierten Daten- oder Pilotfrequenz berechnet wird,

die Datenkompensationseinheit weiter zur Durchführung von S3 verwendet wird, indem die Daten- oder Pilotfrequenz mit mehreren verschiedenen Frequenzversatzwerten kompensiert werden, die jeweils als anfängliche Frequenzversatzwerte verschiedener Zweige fungieren, residuale Frequenzversatzwertschätzung und -kompensation auf der Daten- oder Pilotfrequenz nach anfänglicher Kompensation jedes Zweiges durchgeführt wird, das SIR der Daten- oder Pilotfrequenz nach Kompensation jedes Zweiges berechnet wird, und die Kompensationsdaten, das SIR und der Frequenzversatzwert eines optimalen Zweiges ausgegeben werden, der wenigstens eines von einem maximalen SIR, einem korrekten CRC und einem minimalen BER hat, und der geschätzte Frequenzversatz, der die Summe des anfänglichen Frequenzversatzwertes und des residualen Frequenzversatzwertes des optimalen Zweiges ist, ausgegeben wird,

die Datenkompensationseinheit weiter dazu verwendet wird, um, wenn das SIR des optimalen Zweiges größer als eine SIR-Schwelle ist, den Wert des Verbindungsqualitätszählers Count durch Addition von 1 zu aktualisieren, einen aktuell geschätzten Frequenzversatzwert, der der geschätzte Frequenzversatz ist, auszugeben und einen historischen Frequenzversatzwert für die nächste Frequenzversatzschätzung als das (1-p)-fache des anfänglichen Frequenzversatzwertes des optimalen Zweiges plus p multipliziert mit dem aktuell geschätzten Frequenzversatzwert auszugeben, und, wenn das SIR des optimalen Zweiges nicht größer als eine SIR-Schwelle ist, den Wert des Verbindungsqualitätszählers Count unverändert zu halten und den aktuell geschätzten Frequenzversatzwert, der ein vorheriger historischen Frequenzversatzwert ist, auszugeben und einen historischen Frequenzversatzwert für die nächste Frequenzversatzschätzung als den vorherigen historischen Frequenzversatzwert auszugeben.

7. System nach Anspruch 6, das weiter beinhaltet: Eine Akquisitionseinheit, die zum Akquirieren des Wertes des Verbindungsqualitätszählers Count verwendet wird, wobei der Wert des Verbindungsqualitätszählers Count gleich der Anzahl von Bits "1" in einem Verbindungsqualitäts-Statusregister R ist, wobei das Verbindungsqualitäts-Statusregister R die Länge N Bit hat und N eine positive Anzahl ist.

8. System nach Anspruch 7, wobei die Frequenzversatzwert-schätz- und kompensationseinheit weiter dazu verwendet wird, um, wenn das SIR der durch das historische Frequenzversatz-Glättungsverfahren kompensierten Daten größer als die SIR-Schwelle ist, den Wert des Verbindungsqualitätszählers Count durch Addition von 1 zu aktualisieren und um einen aktuell geschätzten Frequenzversatzwert, der die Summe des historischen Frequenzversatzwertes und des residualen Frequenzversatzwertes ist, auszugeben und um einen historischen Frequenzversatzwert für die nächste Frequenzversatzschätzung als das (1-p)-fache des historischen Frequenzversatzwertes plus p multipliziert mit dem aktuell geschätzten Frequenzversatzwert auszugeben, oder

wenn das SIR der durch das historische Frequenzversatzglättungsverfahren kompensierten Daten nicht größer als die SIR-Schwelle ist, um die letzte Statusposition des Verbindungsqualitäts-Statusregisters R auf 0 zu aktualisieren und um den historischen Frequenzversatzwert für die nächste Frequenzversatzschätzung als den historischen Frequenzversatzwert auszugeben.

## Revendications

1. Procédé pour l'évaluation et la compensation de décalage de fréquence dans des communications mobiles, comprenant :

S1 : la détermination si la valeur d'un Compte de compteur de qualité de liaison est plus grande qu'un seuil de compte pour un procédé de lissage historique ;
si oui, alors S2 est exécuté pour effectuer l'évaluation et la compensation de décalage de fréquence sur une fréquence de données ou pilote en utilisant un procédé de calcul de lissage de décalage de fréquence historique ;
autrement, S3 est exécuté pour effectuer l'évaluation et la compensation de décalage de fréquence sur une fréquence de données ou pilote en utilisant un procédé de calcul de décalage de fréquence de données à branches multiples afin de calculer une valeur initiale pour le procédé de calcul de lissage de décalage de fréquence historique ;
S2 : initialement, la compensation de la fréquence de données ou pilote par une valeur de décalage de fréquence historique ;
l'évaluation d'une valeur de décalage de fréquence résiduelle de la fréquence de données ou pilote soumise à la compensation de décalage de fréquence initiale, et l'exécution de la compensation de décalage de fréquence résiduelle ; et
le calcul du SIR de la fréquence de données ou pilote compensée ;
S3 : la compensation de la fréquence de données ou pilote par de multiples valeurs de décalage de fréquence différentes qui agissent respectivement en tant que valeurs de décalage de fréquence initiale de branches différentes ;
l'exécution d'évaluation et de compensation de valeur de décalage de fréquence résiduelle sur la fréquence de données ou pilote respectivement après compensation initiale de chaque branche ;
le calcul du SIR de la fréquence de données ou pilote après compensation de chaque branche ; et

la sortie des données de compensation, du SIR et de la valeur de compensation de fréquence d'une branche optimale qui a au moins un d'un SIR maximal, d'un CRC correct et d'un BER minimal, et la sortie du décalage de fréquence évalué comme étant la somme de la valeur de décalage de fréquence initiale et de la valeur de décalage de fréquence résiduelle de la branche optimale ;
S4 : la détermination si le SIR est plus grand qu'un seuil de SIR ; si oui, alors S5 est exécuté ; autrement, S6 est exécuté ;
S5 : quand le SIR calculé dans S3 est plus grand que le seuil de SIR, la mise à jour de la valeur du Compte de compteur de qualité de liaison pour ajouter 1, et la sortie d'une valeur de décalage de fréquence couramment évaluée pour être le décalage de fréquence évalué de S3 ;
S6 : quand le SIR calculé dans S3 n'est pas plus grand que le seuil de SIR, le maintien inchangé de la valeur du Compte de compteur de qualité de liaison, et la sortie de la valeur de décalage de fréquence couramment évaluée comme étant une valeur de décalage de fréquence historique précédente ;
S7 : quand le SIR calculé dans S3 est plus grand que le SIR de seuil, la sortie d'une valeur de décalage de fréquence historique pour l'évaluation de décalage de fréquence suivante en tant que (1-p) fois la valeur de décalage de fréquence initiale de la branche optimale plus p fois la valeur de décalage de fréquence actuellement évaluée de S5 ; quand le SIR calculé dans S3 n'est pas plus grand que le SIR de seuil, la sortie de la valeur de décalage de fréquence historique pour l'évaluation de décalage de fréquence suivante en tant que valeur de décalage de fréquence historique précédente ; et
S8 : s'il y a encore des données pour l'évaluation de décalage de fréquence suivante, le retour à S1 ; autrement fin du procédé.

2. Procédé selon la revendication 1, S1 comprenant en outre : le paramétrage du Compte de compteur de qualité de liaison et d'un registre d'état de qualité de liaison R, dans lequel la valeur du Compte de compteur de qualité de liaison est égale au nombre de bits à « 1 » dans le registre d'état de qualité de liaison R, le registre d'état de qualité de liaison R a une longueur de N bits et N est un entier positif ; le seuil de compte se réfère à un seuil de qualité de liaison *CountThr* qui est obtenu à partir d'une simulation ou d'un test basé sur un environnement réel d'un champ externe.

3. Procédé selon la revendication 2, dans lequel S5 comprend en outre S5' :

quand le SIR calculé dans S2 est plus grand que le seuil de SIR, la mise à jour de la valeur du Compte de compteur de qualité de liaison pour ajouter 1, et la sortie d'une valeur de décalage de fréquence couramment évaluée comme étant une somme de la valeur de décalage de fréquence historique de S2 et de la valeur de décalage de fréquence résiduelle de S2 ; quand le SIR calculé dans S2 n'est pas plus grand que le SIR de seuil, la mise à jour de la dernière position d'état du registre d'état de qualité de liaison R comme étant à 0 ; et

S7 comprend en outre : quand le SIR calculé dans S2 est plus grand que le SIR de seuil, la sortie d'une valeur de décalage de fréquence historique pour l'évaluation de décalage de fréquence suivante en tant que (1-p) fois la valeur de décalage de fréquence historique de S2 plus p fois la valeur de décalage de fréquence couramment évaluée de S5' ; quand le SIR calculé dans S2 n'est pas plus grand que le SIR de seuil, la sortie de la valeur de décalage de fréquence historique pour l'évaluation de décalage de fréquence suivante en tant que valeur de décalage de fréquence historique de S2.

4.  Procédé selon la revendication 2, comprenant en outre : le paramétrage de la valeur initiale de chaque bit dans le registre d'état de qualité de liaison R comme étant à 0.

5.  Procédé selon la revendication 1, comprenant en outre : la détermination de la valeur de décalage de fréquence initiale de chaque branche par l'intermédiaire d'une simulation.

6.  Système pour l'évaluation et la compensation de décalage de fréquence dans des communications mobiles, comprenant : une unité de détermination, une unité d'évaluation et de compensation de valeur de décalage de fréquence et une unité de compensation de données, dans lequel

l'unité de détermination est utilisée pour déterminer si la valeur d'un Compte de compteur de qualité de liaison est plus grande qu'un seuil de compte pour un procédé de lissage historique ;

l'unité d'évaluation et de compensation de valeur de décalage de fréquence est utilisée pour effectuer une évaluation et de compensation de valeur de décalage de fréquence sur une fréquence de données ou pilote en utilisant un procédé de lissage de décalage de fréquence historique, S2, lorsque la valeur d'un Compte de compteur de qualité de liaison est plus grande qu'un seuil de compte ; et

l'unité de compensation de données est utilisée pour effectuer l'évaluation et la compensation de décalage de fréquence sur une fréquence de données ou pilote en utilisant un procédé de calcul de décalage de fréquence de données à branches multiples, S3, lorsque la valeur d'un Compte de compteur de qualité de liaison n'est pas plus grande qu'un seuil de compte afin de calculer une valeur initiale pour le procédé de calcul de lissage de décalage de fréquence historique ;

l'unité d'évaluation et de compensation de valeur de décalage de fréquence est en outre utilisée pour effectuer S2 en compensant initialement la fréquence de données ou pilote par une valeur de décalage de fréquence historique ; l'évaluation d'une valeur de décalage de fréquence résiduelle de la fréquence de données ou pilote soumise à la compensation de décalage de fréquence initiale, et l'exécution de compensation de décalage de fréquence résiduelle ; et le calcul du SIR de la fréquence de données ou pilote compensée ;

l'unité de compensation de données est en outre utilisée pour effectuer S3 en compensant la fréquence de données ou pilote par de multiples valeurs de décalage de fréquence différentes qui agissent respectivement en tant que valeurs de décalage de fréquence initiale de branches différentes ; l'exécution d'évaluation et de compensation de valeur de décalage de fréquence résiduelle sur la fréquence de données ou pilote respectivement après compensation initiale de chaque branche ; le calcul du SIR de la fréquence de données ou pilote après compensation de chaque branche ; et la sortie des données de compensation, du SIR et de la valeur de décalage de fréquence d'une branche optimale qui a au moins l'un d'un SIR maximal, d'un CRC correct et d'un BER minimal, et la sortie du décalage de fréquence évalué comme étant la somme de la valeur de décalage de fréquence initiale et de la valeur de décalage de fréquence résiduelle de la branche optimale ;

l'unité de compensation de données est en outre utilisée pour la mise à jour, quand le SIR de la branche optimale est plus grand qu'un SIR de seuil, de la valeur du Compte de compteur de qualité de liaison pour ajouter 1, la sortie d'une valeur de décalage de fréquence couramment évaluée comme étant le décalage de fréquence évalué ; et la sortie d'une valeur de décalage de fréquence historique pour l'évaluation de décalage de fréquence suivante en tant que (1-p) fois la valeur de décalage de fréquence initiale de la branche optimale plus p fois la valeur de décalage de fréquence couramment évaluée ; et pour le maintien inchangé, quand le SIR de la branche optimale n'est pas plus grand qu'un SIR de seuil, la valeur du Compte de compteur de qualité de liaison, et la sortie de la valeur de décalage de fréquence couramment évaluée comme étant une valeur de décalage de fréquence historique précédente, et la sortie d'une valeur de décalage de fréquence historique pour l'évaluation de décalage de fréquence suivante en tant que valeur de décalage de fréquence historique précédente.

7. Système selon la revendication 6, comprenant en outre : une unité d'acquisition qui est utilisée pour acquérir la valeur de Compte du compteur de qualité de liaison, dans lequel la valeur de Compte du compteur de qualité de liaison est égale au nombre de bits à « 1 » dans un registre d'état de qualité de liaison R, le registre d'état de qualité de liaison R a une longueur de N bits et N est un entier positif.

8. Système selon la revendication 7,
dans lequel l'unité d'évaluation et de compensation de valeur de décalage de fréquence est en outre utilisée pour la mise à jour, quand le SIR des données compensées par le procédé de lissage de décalage de fréquence historique est plus grand que le SIR de seuil, la mise à jour de la valeur de Compte du compteur de qualité de liaison pour ajouter 1, et la sortie d'une valeur de décalage de fréquence couramment évaluée comme étant une somme de la valeur de décalage de fréquence historique et de la valeur de décalage de fréquence résiduelle ; et la sortie d'une valeur de décalage de fréquence historique pour l'évaluation de décalage de fréquence suivante en tant que (1-p) fois la valeur de décalage de fréquence historique plus p fois la valeur de décalage de fréquence couramment évaluée ; ou
la mise à jour, quand le SIR des données compensées par le procédé de lissage de décalage de fréquence historique n'est pas plus grand que le SIR de seuil, la mise à jour de la dernière position d'état du registre d'état de qualité de liaison R comme étant à 0, et la sortie de la valeur de décalage de fréquence historique pour l'évaluation de décalage de fréquence suivante en tant que valeur de décalage de fréquence historique.

## Fig. 1

## Fig. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008107098 A1
- GB 2374767 A